(19)

**Europäisches Patentamt**
**European Patent Office**
**Office européen des brevets**

(11) **EP 4 682 179 A1**

(12) **EUROPEAN PATENT APPLICATION**

(43) Date of publication:
21.01.2026 Bulletin 2026/04

(21) Application number: 25186596.0

(22) Date of filing: 01.07.2025

(51) International Patent Classification (IPC):
**C08F 210/02** (2006.01)    **C09J 133/06** (2006.01)

(52) Cooperative Patent Classification (CPC):
(C-Sets available)
**C08F 210/02; C09J 123/0869;** C08F 2400/04
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 17.07.2024 KR 20240094414

(71) Applicants:
• **SK Innovation Co., Ltd.**
**Seoul 03188 (KR)**
• **SK Geo Centric Co., Ltd.**
**Jongno-gu**
**Seoul 03161 (KR)**

(72) Inventors:
• **LEE, In Su**
**34124 Daejeon (KR)**

• **PARK, Doh Yeon**
**34124 Daejeon (KR)**
• **GARCIA ESTOPA, Montserrat**
**03161 Seoul (KR)**
• **KWAK, Byoung Kyu**
**34124 Daejeon (KR)**
• **KWON, Il Young**
**34124 Daejeon (KR)**
• **KIM, Hong Chan**
**34124 Daejeon (KR)**
• **SON, Sang Ha**
**34124 Daejeon (KR)**
• **LEE, Ho Seong**
**34124 Daejeon (KR)**
• **RECASENS, Manuel**
**03161 Seoul (KR)**

(74) Representative: **Lorenz Seidler Gossel Part. mbB**
**Widenmayerstr. 23**
**80538 München (DE)**

(54) **ETHYLENE-ACRYLIC ACID COPOLYMER WITH EXCELLENT LONG-LASTING ADHESION AND METHOD FOR PREPARING THE SAME**

(57) Provided an ethylene-acrylic acid copolymer which may maintain high initial adhesive properties for a long time by having a zero shear viscosity ($\eta_0$) and a storage modulus (G') in specific ranges.

EP 4 682 179 A1

(52) Cooperative Patent Classification (CPC): (Cont.)

C-Sets
**C08F 210/02, C08F 4/34;**
C08F 210/02, C08F 220/06, C08F 2500/17,
C08F 2500/04, C08F 2500/39

**Description**

**TECHNICAL FIELD**

The present invention relates to an ethylene-acrylic acid copolymer and a method for preparing the same, and more particularly, to an ethylene-acrylic acid copolymer which can maintain high initial adhesive strength over an extended period of time.

**BACKGROUND**

An ethylene-acrylic acid copolymer (EAA) is being used in various fields as a high-value added chemical product, and is mainly used as, for example, an adhesive for thin packaging materials such as aluminum foil used in milk cartons and detergent packaging as a functional adhesive resin.

However, the ethylene-acrylic acid copolymer needs high pressure equipment in a manufacturing process and requires advanced technology of producing products at high acidity and the like. For example, copolymerization of an ethylene monomer and a carboxylic acid monomer uses a high pressure free radical copolymerization system, and specifically, is performed by an autoclave reactor or a tube type reactor.

In particular, when the ethylene-acrylic acid copolymer is applied or thermally adhered on the surface of a polymer film, paper, a metal foil, textile, and the like, it has excellent adhesive properties initially, but has a limit to adhesive strength which deteriorates over time.

Therefore, an ethylene-acrylic acid copolymer which may stably maintain high initial adhesive properties for a long time after adhesion needs to be studied.

**SUMMARY**

The present invention aims to providing an ethylene-acrylic acid copolymer which may maintain high initial adhesive properties for a long time and a method for preparing the same.

Against this background, the invention provides an ethylene-acrylic acid copolymer which has a zero shear viscosity ($\eta_0$) at 170°C of 3,800 Pa·s or more, when measured as described further below, and a storage modulus (G') at a loss modulus (G") of 500 Pa of 90 Pa or more, as measured at a crossover frequency of 0.01 to 20 Hz at 170°C.

As an exemplary embodiment, in the ethylene-acrylic acid copolymer in which a log M value of maximum dw/dlog M satisfies the following Equation 1, the ethylene-acrylic acid copolymer having a cumulative concentration fraction of 0.75 or more may have a weight average molecular weight of 220,000 g/mol or more:

$$[\text{Equation 1}]$$

$$4.2 \leq \log M \leq 4.8$$

wherein log M is a logarithmic value of a molecular weight M as a horizontal axis of the ethylene-acrylic acid copolymer measured by gel permeation chromatography, and in the range of log M, a maximum peak value of dw/dlog M obtained by differentiating a concentration fraction w by the logarithmic value of the molecular weight, log M is included.

As an exemplary embodiment, the ethylene-acrylic acid copolymer may have a weight average molecular weight/number average molecular weight (Mw/Mn) of 6 or more and a z average molecular weight/ weight average molecular weight (Mz/Mw) of 3.9 or more.

As an exemplary embodiment, the ethylene-acrylic acid copolymer may have the weight average molecular weight (Mw) of 90,000 g/mol or more, the number average molecular weight of 17,000 or more, and the z average molecular weight (Mz) of 400,000 g/mol or more.

As an exemplary embodiment, in the ethylene-acrylic acid copolymer, a content of an acrylic acid structural unit may be 1 to 30 wt% of the total weight of the copolymer.

As an exemplary embodiment, the ethylene-acrylic acid copolymer may have a melt index (190°C/ 2.16 kg, ASTM D 1238) of 5 to 15.

The invention further proposes a method for making the ethylene-acrylic acid copolymer as described, the method including copolymerizing monomers including an ethylene monomer and an acrylic acid monomer in a reactor at a reaction temperature of 150 to 350°C under a reaction pressure of 1,000 to 5,000 bar.

As an exemplary embodiment, the reaction temperature may be 180 to 300°C, preferably 200 to 280°C more preferably 220 to 260°C.

As an exemplary embodiment, the reaction pressure may be 1,500 to 4,000 bar, preferably 1,800 to 3,000 bar, more preferably 2,000 to 2,300 bar.

As an exemplary embodiment, the reactor may have a stirrer installed inside for mixing a reactant and a product, and a stirrer shaft may have a baffle to divide the inside of the reactor into an upper portion and a lower portion of the reactor. In addition, the number of baffles is not limited to one, and the inside of the reactor can be divided into two or more sections

As an exemplary embodiment, the ethylene monomer and the acrylic acid comonomer may be supplied separately into the upper portion and the lower portion of the reactor, respectively.

As an exemplary embodiment, the reaction temperature in the upper portion of the reactor may be adjusted to a temperature that is at least 10°C lower than the reaction temperature in the lower portion of the reactor, preferably a temperature difference of 12 to 15°C

As an exemplary embodiment, the method may include supplying an initiator mixed solution to the reactor, the initiator mixed solution including a radical initiator and a diluting solvent.

As an exemplary embodiment, the initiator mixed solution may be supplied to the reactor at such rate that the content of initiator based on total monomer is 0.05 to 1 wt% based on the combined weight of the monomers, preferably 0.1 to 0.5 wt%, more preferably 0.15 to 0.3 wt%.

The ethylene-acrylic acid copolymer according to the invention may form an adhesive.

As an exemplary embodiment, it may take 14 days or more for a laminated sheet obtained by co-extrusion lamination after the adhesive forms an adhesive layer between an aluminum metal sheet and a low-density polyethylene sheet to lose its adhesive strength in a citric acid aqueous solution (3 wt%) at 45°C.

Yet further, the invention relates to a laminated sheet wherein the ethylene-acrylic acid copolymer according to the invention is comprised in an adhesive layer between a metal sheet and a polymer sheet.

Still further, the invention relates to a pack for fluid goods, which comprises a laminated sheet according to the invention.

Other features and aspects will be apparent from the following detailed description, the drawings, and the claims.

## BRIEF DESCRIPTION OF THE DRAWINGS

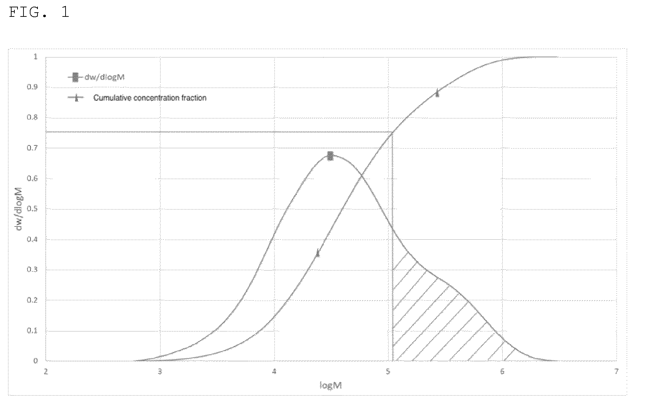

FIG. 1 is a graph in which changes in dw/dlog M and a cumulative concentration fraction depending on log M of the ethylene-acrylic acid copolymer of the present invention are measured.

## DETAILED DESCRIPTION OF EMBODIMENTS

Hereinafter, an ethylene-acrylic acid copolymer having excellent adhesive strength and a method for preparing the same according to the present invention will be described in detail.

The unit of % used in the present specification without particular mention refers to % by weight, unless otherwise defined.

An ethylene-acrylic acid copolymer (EAA) is a high value-added chemical product and is used for general purposes in various fields. In particular, when the ethylene-acrylic acid copolymer is applied and adhered on a surface of an adherend having various surface materials such as polymer films, paper, metal foil, and fabric, it has excellent initial adhesive strength and is mainly used as an adhesive. However, the conventional ethylene-acrylic acid copolymer has a limitation in losing initial adhesive strength over time, after it is adhered to an adherend. Therefore, management is required for storage, transportation, and the like of products with completed adhesion, quality of the products is greatly affected over time, and the resulting costs are significant.

The conventional ethylene-acrylic acid copolymer has significantly low long-term adhesive strength, as described above. Accordingly, the present invention provides an ethylene-acrylic acid copolymer having extremely excellent long-term adhesive strength as compared with the conventional copolymer, by newly specifying elements affecting the long-term adhesive strength of the ethylene-acrylic acid copolymer and defining a numerical range which may maximize long-term adhesive strength for zero shear viscosity and storage modulus as specified elements.

As a means for significantly improving long-term adhesive properties of the ethylene-acrylic acid copolymer, the ethylene-acrylic acid copolymer according to the present invention have a zero shear viscosity ($\eta_0$) at 170°C of 3,800 Pa·s or more and a storage modulus (G') at a loss modulus (G") of 500 Pa of 90 Pa or more as measured at a crossover frequency of 0.01 to 20 Hz at 170°C.

As an example, the ethylene-acrylic acid copolymer may have a zero shear viscosity ($\eta_0$) at 170°C of 3,800 Pa·s or more, 3,900 Pa·s or more, 4,000 Pa·s or more, 4,100 Pa·s or more, 4,200 Pa·s or more, 4,300 Pa·s or more, 4,500 Pa·s or more, 4,600 Pa·s or more, 4,700 Pa·s or more, 4,800 Pa·s or more, 4,900 Pa·s or more, or 5,000 Pa·s or more, as the lower limit and 6,000 Pa·s or less, 5,500 Pa·s or less, or 5,200 Pa·s or less, as the upper limit.

The storage modulus (G') may be 90 Pa or more, 91 Pa or more, 92 Pa or more, 93 Pa or more, 94 Pa or more, 95 Pa or more, or 96 Pa or more, as the lower limit and 100 Pa or less or 99 Pa or less, as the upper limit.

Thus, initial excellent adhesive properties on an adherend having various surface materials may be maintained for a long time, and, in particular, long-term adhesive properties between an aluminum metal surface and a polyethylene film surface are further improved.

The zero shear viscosity is denoted as $\eta_0$ and is a viscosity when flow of a material substantially stops. The zero shear viscosity refers to a representative value calculated by extrapolation from a melt viscosity measured according to a change in a shear rate at a specific temperature using a rheometer. The zero shear viscosity refers to a viscosity value when a shear velocity converges to zero, calculated from melt viscosity data measured at a temperature of 170°C, in a crossover frequency range of 0.01 to 20 Hz.

In addition, the storage modulus is denoted as G' and is a measure of stored energy, that is, a measured value for elastic components of a material. The loss modulus is denoted as G" and is a measured value for viscosity components of a material as a measure of lost energy as heat. The storage modulus refers to an elastic modulus at a loss modulus (G") of 500 Pa measured at 170°C, in a crossover frequency range of 0.01 to 20 Hz. The zero shear viscosity and the storage modulus are properties of a previously defined polymer, and more specific measurement means are described later.

As an example, in the ethylene-acrylic acid copolymer in which a log M value of maximum dw/dlog M satisfies the following Equation 1, the ethylene-acrylic acid copolymer having a cumulative concentration fraction is 0.75 or more may have a weight average molecular weight of 220,000 g/mol or more:

$$[\text{Equation 1}]$$

$$4.2 \leq \log M \leq 4.8$$

wherein log M is a logarithmic value of a molecular weight M as a horizontal axis of the ethylene-acrylic acid copolymer measured by gel permeation chromatography, and in the range of log M, a maximum peak value of dw/dlog M obtained by differentiating a concentration fraction w by the logarithmic value of the molecular weight, log M is included.

Referring to FIG. 1, the ethylene-acrylic acid copolymer of the present invention is characterized by data measured by gel permeation chromatography with a polystyrene standard.

It is a copolymer having a high ratio of a high molecular weight in a differential molecular weight distribution curve in which a horizontal axis is log M which is a logarithmic value of a molecular weight M and a vertical axis is dw/dlog M obtained by differentiating a concentration fraction w by the logarithmic value of the molecular weight, log M, and this includes chromatography in a shoulder form in a polymer range. In addition, the ethylene-acrylic acid copolymer is a copolymer in which (1) the dw/dlog M value is the maximum in a range of $4.2 \leq \log M \leq 4.8$ and (2) the weight average molecular weight of a polymer having the cumulative concentration fraction of 0.75 or more is 220,000 g/mol or more.

The weight average molecular weight of the polymer having the cumulative concentration fraction of 0.75 or more may be 220,000 g/mol or more, 230,000 g/mol or more, 240,000 g/mol or more, or 260,000 g/mol or more, as the lower limit and 400,000 g/mol or less, 380,000 g/mol or less, 350,000 g/mol or less, 300,000 g/mol or less, or 280,000 g/mol or less, as the upper limit.

The weight average molecular weight/number average molecular weight (Mw/Mn) of the ethylene-acrylic acid copolymer may be 6 or more, 6.1 or more, 6.2 or more, 6.3 or more, 6.4 or more, or 6.5 or more, as the lower limit and 8 or less or 7 or less, as the upper limit.

The z average molecular weight/ weight average molecular weight (Mz/Mw) of the ethylene-acrylic acid copolymer may be 3.9 or more, 4.0 or more, or 4.1 or more, as the lower limit and 6 or less or 5 or less, as the upper limit.

The weight average molecular weight (Mw) of the ethylene-acrylic acid copolymer may be 90,000 g/mol or more, 100,000 g/mol or more, or 110,000 g/mol or more, as the lower limit and 200, 000 g/mol or less or 150,000 g/mol or less, as the upper limit.

The number average molecular weight of the ethylene-acrylic acid copolymer may be 17,000 g/mol or more, 17,100 g/mol or more, or 17,200 g/mol or more, as the lower limit and 20,000 g/mol or less or 19,000 g/mol or less, as the upper limit.

The z average molecular weight of the ethylene-acrylic acid copolymer may be 400,000 g/mol or more, 410,000 g/mol or more, 420,000 g/mol or more, 440,000 g/mol or more, 450,000 g/mol or more, 460,000 g/mol or more, or 470,000 g/mol or more, as the lower limit and 600,000 g/mol or less, 500,000 g/mol or less, or 490,000 g/mol or less, as the upper limit.

The ethylene-acrylic acid copolymer may have long chain branching and may have a high ratio of a high molecular weight in the molecular weight distribution and many entanglements between polymer chains. As an example, the copolymer having the structural properties as such satisfies both the average molecular weight and the molecular weight distribution in the range described above, thereby significantly delaying a decrease in adhesive strength over time and further improving the long-term adhesive strength described above.

The zero shear viscosity and the storage modulus may be controlled by adjusting various preparation conditions in the method for preparing the ethylene-acrylic acid copolymer. As an example, by adjusting the conditions such as polymerization pressure, polymerization temperature, the use content of an initiator, and the like, the ethylene-acrylic acid copolymer with the zero shear viscosity and the storage modulus being controlled may be provided.

The ethylene-acrylic acid copolymer may be prepared by a preparation method including copolymerizing monomers including an ethylene monomer and an acrylic acid monomer to prepare an ethylene-acrylic acid copolymer, wherein the polymerization is performed under the conditions of high temperature and high pressure.

As an example, the preparation may be performed by polymerizing the monomers at a temperature of 150 to 350°C or 180 to 300°C. In addition, the ethylene-acrylic acid copolymer may be prepared by polymerizing monomers under a pressure of 1,000 to 5,000 bar or 1,500 to 4,000 bar.

The ethylene-acrylic acid copolymer includes an acrylic acid structural unit and an ethylene structural unit, and a content of the acrylic acid structural unit may be 1 to 30 wt%, 3 to 25 wt%, or 7 to 15 wt% of the total weight of the copolymer. When this is satisfied, high initial adhesive properties may be implemented, and the high initial adhesive properties may be maintained for a long time by satisfying the zero shear viscosity and the storage modulus in the range described above.

The melt index (190°C / 2.16 kg, ASTM D 1238) of the ethylene-acrylic acid copolymer may be, for example, 5 to 15, 5 to 10, or 5 to 9.

Hereinafter, the polymerization method will be described as a specific example.

The formation of the ethylene-acrylic acid copolymer according to the present invention may include a supply step of supplying a compressed material to a reactor, the compressed material being formed by secondarily compressing a mixture including monomers including an ethylene monomer and an acrylic acid comonomer which have been first compressed with a first compressor, with a second compressor which is a high pressure compressor. In addition, the polymerization step may further include a circulation step of separating an unreacted residue separated from a discharge from the reactor and resupplying the discharge to a front end of the first compressor or the second compressor. Herein, "discharge" is discharged after an ethylene-acrylic acid polymerization reaction is performed inside a reactor, in an ethylene-acrylic acid copolymer preparation process, and may include an ethylene copolymer and an unreacted residue. In addition, the "unreacted residue" is a material other than the ethylene-acrylic acid copolymer, in the ethylene-acrylic acid copolymer preparation process, and may include, specifically, an unreacted ethylene monomer, an unreacted acrylic acid comonomer, a solvent, an initiator, other additives, and the like.

Specifically, the supplying step may include a first supply step and a second supply step, and the ethylene monomer is supplied in the first supply step and the acrylic acid comonomer is supplied in the second supply step. Regarding the supply process of a reactant, the ethylene monomer supplied in the first supply step is compressed with the first compressor to produce a first material. Thereafter, the acrylic acid monomer supplied in the second supply step and the mixture including the first compressed material are secondarily compressed with a high pressure compressor which is the second compressor to produce a second compressed material. The produced second compressed material is supplied to the reactor, and the ethylene monomer and the acrylic acid comonomer in the second compressed material are copolymerized in the reactor to synthesize the ethylene-acrylic acid copolymer.

The reactor has a stirrer installed inside for mixing a reactant and a product, and a stirrer shaft has a baffle to divide the inside of the reactor into an upper portion and a lower portion of the reactor. The ethylene monomer and the acrylic acid comonomer are supplied separately into the upper portion and the lower portion of the reactor. However, the method for polymerizing an ethylene-acrylic acid copolymer is not defined by the presence and the number of baffles for dividing the inside of the reactor.

The circulation step may include a first circulation step of separating the discharge from the reactor by a high pressure separator and supplying an unreacted residue to the front end of the secondary compressor. In addition, it may include a second circulation step of secondarily separating the separated material from the high pressure separator by a low pressure separator and supplying an unreacted residue to the front end of the first compressor.

Specifically, in the first circulation step, impurities may be discharged to the outside through a filter capable of separating the unreacted residue by filtration and removed, and impurities other than the unreacted residue may also be filtered and separated. In the second circulation step, the discharge remaining after separating the first filtered unreacted residue may be secondarily filtered to separate the remaining unreacted residue, which may be supplied to the first compressor.

In the polymerization step, the polymerization may be polymerization by an initiator, for example, may be free radical polymerization. Accordingly, the compressed material supplied to the reactor may further include an initiator, specifically a radical initiator, and the polymerization may be performed by a reaction between each monomer under the radical initiator. As an example, the polymerization may be performed by an initiator mixed solution including a radical initiator and a diluting solvent. Any content of the initiator may be used as long as a radical polymerization reaction is initiated, and for example, the initiator may be used at 0.001 to 1 part by weight based on 100 parts by weight of a total monomer. In addition, a content of the diluting solvent used may be properly adjusted, and for example, 5 to 1,000 parts by weight of the diluting solvent may be diluted and used with respect to 1 part by weight of the initiator. The initiator mixed solution may be supplied to the upper and lower portions of the reactor, respectively.

As an example, any type of radical initiator may be used as long as radical polymerization between an ethylene monomer and an acrylic acid comonomer is performed, and a peroxy-based organic peroxide including any one or two or more selected from peroxycarbonate, peroxydicarbonate, peroxyester, and peroxyketal may be exemplified.

The diluting solvent may be a known initiator diluting solvent, and for example, the zero shear viscosity and the storage modulus may be controlled more precisely with the effect described above by using a paraffin-based solvent, more preferably Isopar-H of the paraffin-based solvents as the diluting solvent.

In an example, the compressed material supplied to the reactor may further include a chain transfer agent. As a non-limiting example, the chain transfer agent may be aliphatic and olefin-based hydrocarbons, for example, compounds such as isobutane, propylene, butylene, hexane, cyclohexane, and octane; ketone-based compounds such as acetone, methyl ethyl ketone, diethyl ketone, and diamylketone; aldehyde-based compounds such as formaldehyde, acetaldehyde, and propionaldehyde; and alcohol-based compounds such as methanol, ethanol, propanol, and butanol; and the like. When the chain transfer agent is used, the chain transfer agent may be used at 0.1 to 20 parts by weight with respect to 100 parts by weight of the total monomer.

As described above, the ethylene-acrylic acid copolymer according to the present invention can be used as an adhesive, and the present invention is further directed to an adhesive including the ethylene-acrylic acid copolymer.

The adhesive according to an exemplary embodiment of the present invention may further include an additive, and when the additive is further included, 0.01 to 10 parts by weight or 0.05 to 5 parts by weight of the additive may be included with respect to 100 parts by weight of the ethylene-acrylic acid copolymer. As an example, the additive may include any one or two or more selected from pigments, dyes, defoamers, preservatives, thickeners, modifiers, humectants, nucleating agents, anti-blocking agents, processing aids, UV stabilizers, neutralizers, lubricants, surfactants and tackifiers, plasticizers, antioxidants, toning agents, reinforcement, foaming agents, flame retardants, and the like.

The adhesive according to the present invention, that is, the ethylene-acrylic acid copolymer may be used as an adhesive use for various objects such as sterilization packs such as milk cartons and aluminum foil laminates, and specifically, shows high adhesive properties in adherends having various surface materials such as polymer films, paper, metal foils, and fabric. In particular, the present invention may implement higher initial adhesive properties and higher long-term adhesive properties in adhesion between metal surfaces, adhesion between polymer films, or adhesion between a metal surface and a polymer film. As an example, adhesive properties between an aluminum metal sheet surface and a polyethylene sheet surface may be better. It may take 14 days or more or 15 days or more for a laminated sheet obtained by co-extrusion lamination after the adhesive according to an exemplary embodiment forms an adhesive layer between an aluminum metal sheet and a low-density polyethylene sheet to lose its adhesive strength under harsh conditions of adding the laminated sheet to a citric acid aqueous solution (3 wt%) at 45°C. When the zero shear viscosity and the storage modulus in the ranges described above are not satisfied, it may take 12 days or less, which is significantly decreased by about 25% or more.

As an example, the present invention may provide a laminated sheet in which the adhesive, that is, the ethylene-acrylic acid copolymer forms an adhesive layer between a metal sheet and a polymer sheet. In addition, the present invention may provide a pack which is formed of a laminate including the laminated sheet and has a fluid housing space.

Hereinafter, the present invention will be described in detail by the examples.

[Example 1]

### <Preparation of ethylene-acrylic acid copolymer>

An ethylene monomer was supplied to the front end of a first compressor at an average flow rate of 900 kg/h, compressed in the first compressor, and supplied to a second compressor at a pressure of 200 bar, while an acrylic acid comonomer was supplied to the second compressor at an average flow rate of 500 kg/hr. An initiator mixed solution was supplied to the inside of a reactor at an average flow rate of 53 L/hr, and the upper inside of the reactor was adjusted to a temperature of 234°C and the lower inside of the reactor was adjusted to a temperature of 248°C and a pressure of 2,175 bar, thereby inducing a polymerization reaction. At this time, an initiator (tert-butyl peroxyacetate) diluted to 10 wt% with a diluting solvent (Isopar-H, ExxonMobil) was used as the initiator mixed solution. Further, a discharge from the reactor was supplied to a high pressure separator, and the discharge from which an unreacted residue was first separated by the high pressure separator was supplied to a low pressure separator to secondarily separate the unreacted residue. An ethylene-acrylic acid copolymer from which the unreacted residue was secondarily separated was obtained in the low pressure separator, and the acrylic acid content of the ethylene-acrylic acid copolymer at this time was 8.2 wt%.

**<Measurement of physical properties of ethylene-acrylic acid copolymer>**

The zero shear viscosity ($\eta_0$), the elasticity, the average molecular weight, the polydispersity index, and the molecular weight distribution of the prepared ethylene-acrylic acid copolymer were measured, the long-term adhesive strength of the ethylene-acrylic acid copolymer was also measured, and the results therefor are shown in the following Table 1.

**1. Measurement of zero shear viscosity and elasticity**

The ethylene-acrylic acid copolymer was allowed to stand under the constant temperature and humidity conditions (temperature: 25°C, relative humidity: 45%) for 3 weeks or more after preparation so that it was aged. Further, the aged ethylene-acrylic acid copolymer was physically pressed for 10 seconds with a hot press at 160°C to prepare a sample having a diameter of 2.5 cm and a thickness of 2 mm. Thereafter, the rheological viscosity data for elasticity of the sample was obtained using ARES G2 Machine. At this time, the rheological data for elasticity was measured after the sample was loaded into the ARES G2 machine at 170°C and was allowed to stand for 20 minutes with the thickness of a sample holder being lowered to 1 mm to remove bubbles, in a crossover frequency range of 0.01 to 20 Hz. Further, a storage modulus (G') at a loss modulus (G") of 500 Pa was calculated from the rheological data.
In addition, the zero shear viscosity ($\eta_0$) of the ethylene-acrylic acid copolymer was calculated as a viscosity when the crossover frequency converged to 0 by regression of the data using a cross model.

**2. Measurement of average molecular weight, polydispersity index, and molecular weight distribution**

The average molecular weight, the polydispersity, and the molecular weight distribution of the ethylene-acrylic acid copolymer were measured using gel permeation chromatography (GPC). At this time, it was difficult to find a combination of an appropriate solvent and a column for the ethylene-acrylic acid copolymer due to a difference in polarity between ethylene and acrylic acid, and it was also difficult to solve an interaction problem of a hydrogen bond of a pure copolymer and an acid group of a GPC column. In order to avoid the interaction, the acid group of the copolymer was esterified, methylated, and silylated, and the ethylene-acrylic acid copolymer was silylated for GPC analysis. At this time, the temperature during the measurement was 160°C, trichlorobenzene was used as a solvent, and polystyrene was used as a standard sample, thereby calculating a molecular weight.

**<Evaluation of long-term adhesive strength of ethylene-acrylic acid copolymer>**

A laminated sheet (Al/EAA/LDPE multi-layer) obtained by co-extrusion lamination after the adhesive formed an adhesive layer between an aluminum metal sheet and a low density polyethylene sheet was added to a container containing a citric acid aqueous solution (3 wt%) at 45°C and the container was sealed. Subsequently, the container was allowed to stand under constant temperature conditions at 45°C, the time taken to lose adhesive strength using a peel tester (TA Instrument) was measured, and the results are shown in the following Table 1.

[Examples 2 to 5]

Ethylene-acrylic acid copolymers were prepared in the same manner as in Example 1, except that the ethylene-acrylic acid copolymers were prepared by adjusting the pressure, the temperature, and the initiator content so that the zero shear viscosity ($\eta_0$) and the storage modulus (G') of the ethylene-acrylic acid copolymers prepared as shown in the following Table 1 were made different. Further, the zero shear viscosity ($\eta_0$), the elasticity, and the long-term adhesive strength of the prepared ethylene-acrylic acid copolymer were measured in the same manner as in Example 1, and the results are shown in the following Table 1.
Specifically, the process was performed in the same manner as in Example 1, except that in Example 2, the pressure, the temperature, and the initiator flow rate were adjusted to 2180 bar, the reactor upper temperature of 232°C, the reactor lower temperature of 244°C, and the initiator mixed solution flow rate of 53 L/hr, respectively; in Example 3, the pressure, the temperature, and the initiator flow rate were adjusted to 2200 bar, the reactor upper temperature of 235°C, the reactor lower temperature of 248°C, and the initiator mixed solution flow rate of 42 L/hr, respectively; in Example 4, the pressure, the temperature, and the initiator flow rate were adjusted to 2225 bar, the reactor upper temperature of 235°C, the reactor lower temperature of 248°C, and the initiator mixed solution flow rate of 45 L/hr, respectively; and in Example 5, the pressure, the temperature, and the initiator flow rate were adjusted to 2160 bar, the reactor upper temperature of 235°C, the reactor lower temperature of 249°C, and the initiator mixed solution flow rate of 33 L/hr, respectively.

[Comparative Examples 1 to 4]

Ethylene-acrylic acid copolymers were prepared in the same manner as in Example 1, except that the ethylene-acrylic acid copolymers having the numerical ranges of the zero shear viscosity ($\eta_0$) and the storage modulus (G') outside those suggested in the present invention were prepared by controlling the pressure, the temperature, and the initiator content. The zero shear viscosity ($\eta_0$), the elasticity, and the long-term adhesive strength of the prepared ethylene-acrylic acid copolymer were measured in the same manner as in Example 1, and the results are shown in the following Table 1.

The following Table 1 shows the results for the zero shear viscosity, the storage modulus at the loss modulus of 500 Pa, the average molecular weight (Mw, Mn, Mz) molecular weight distribution, the polydispersity index (PDI), and the long-term adhesive strength (adhesive strength retention period) of the ethylene-acrylic acid copolymers of Examples 1 to 5 and Comparative Examples 1 to 4:

[Table 1]

| | Example | | | | | Comparative Example | | | |
|---|---|---|---|---|---|---|---|---|---|
| | 1 | 2 | 3 | 4 | 5 | 1 | 2 | 3 | 4 |
| $\eta_0$ | 4,735 | 5,026 | 4246 | 3,926 | 4,607 | 3,273 | 3,063 | 3,681 | 4,644 |
| G' | 96.0 | 93.3 | 92.3 | 92.7 | 91.2 | 84.8 | 84.8 | 93.8 | 87.6 |
| Mn | 17,454 | 17,139 | 17,214 | 17,132 | 19,253 | 16,025 | 16,656 | 16,881 | 16,381 |
| Mw | 114,746 | 110,329 | 110,311 | 108,087 | 119,002 | 92,562 | 93,915 | 100,704 | 92,814 |
| Mz | 480,734 | 448,386 | 441,059 | 424,019 | 466,988 | 333,853 | 348,778 | 387,491 | 357,217 |
| PDI | 6.574 | 6.437 | 6.408 | 6.309 | 6.181 | 5.776 | 5.639 | 5.966 | 5.666 |
| Mw (cumulative concentration fraction $\geq$ 0.75) | 262,169 | 252,356 | 243,305 | 245,401 | 290,510 | 215,298 | 213,892 | 216,218 | 218,541 |
| Adhesive strength retention period (days) | 15 or more | 15 or more | 15 or more | 15 or more | 15 or more | 12 or less | 12 or less | 12 or less | 12 or less |

Referring to Table 1, the examples where the zero shear viscosity ($\eta_0$) at 170°C is 3,800 Pa·s or more, and the storage modulus (G') measured at a loss modulus (G") of 500 Pa is 90 Pa or more, in the crossover frequency range of 0.01 to 20 Hz at 170°C, showed an adhesive strength retention period of 15 days or more. However, the comparative examples having the zero shear viscosity ($\eta_0$) of less than 3,800 Pa·s and the storage modulus (G') of less than 90 Pa had the adhesive strength retention period of 12 days or less. Therefore, it was confirmed from Table 1 that the long-term adhesive strength of the examples satisfying the zero shear viscosity ($\eta_0$) and the storage modulus (G') in the specific ranges was better by 30% or less than that of the comparative examples which did not satisfy the range. In addition, upon comparison with Comparative Examples 3 and 4 based on the examples, an excellent long-term adhesive strength effect was implemented only when both the zero shear viscosity ($\eta_0$) in the specific range and the storage modulus (G') in the specific range were satisfied, and when any one of the two was not satisfied, the effect was not implemented. Besides, it was confirmed from Table 1 that Example 1 having an excellent long-term adhesive strength effect had the weight average molecular weight of a polymer having a cumulative concentration fraction of 0.75 or more of 262,169 g/mol, and the molecular weight in the polymer range was significantly high as compared with the weight average molecular weight of 213,892 g/mol of Comparative Example 2.

In addition, it was confirmed in Examples 1 and 2 that the physical properties such as the zero shear viscosity and the storage modulus at the loss modulus of 500 Pa were maintained even after 350 days, by measurement with an advanced rheometric expansion system (ARES).

The ethylene-acrylic acid copolymer according to the present invention may maintain high initial adhesive properties for a long time.

**Claims**

1.  An ethylene-acrylic acid copolymer which has

    a zero shear viscosity ($\eta_0$) at 170°C of 3,800 Pa·s or more, when measured as described in the specification, and a storage modulus (G') at a loss modulus (G") of 500 Pa of 90 Pa or more as measured at a crossover frequency of 0.01 to 20 Hz at 170°C.

2.  The ethylene-acrylic acid copolymer of claim 1, wherein in the ethylene-acrylic acid copolymer in which a log M value of maximum dw/dlog M satisfies the following Equation 1, the ethylene-acrylic acid copolymer having a cumulative concentration fraction of 0.75 or more has a weight average molecular weight of 220,000 g/mol or more]:

    $$[\text{Equation 1}]$$

    $$4.2 \leq \log M \leq 4.8$$

    wherein log M is a logarithmic value of a molecular weight M as a horizontal axis of the ethylene-acrylic acid copolymer measured by gel permeation chromatography, and in the range of log M, a maximum peak value of dw/dlog M obtained by differentiating a concentration fraction w by the logarithmic value of the molecular weight, log M is included.

3.  The ethylene-acrylic acid copolymer of any one of the preceding claims, wherein the ethylene-acrylic acid copolymer has

    a weight average molecular weight/number average molecular weight (Mw/Mn) of 6 or more, and/or a z average molecular weight/ weight average molecular weight (Mz/Mw) of 3.9 or more.

4.  The ethylene-acrylic acid copolymer of any one of the preceding claims, wherein the ethylene-acrylic acid copolymer has a weight average molecular weight (Mw) of 90,000 g/mol or more, a number average molecular weight of 17,000 g/mol, and/or a z average molecular weight (Mz) of 400,000 g/mol or more.

5.  The ethylene-acrylic acid copolymer of any one of the preceding claims, wherein a content of an acrylic acid structural unit in the ethylene-acrylic acid copolymer is 1 to 30 wt%, preferably 3 to 25 wt%, more preferably 7 to 15 wt% of the total weight of the copolymer.

6.  The ethylene-acrylic acid copolymer of any one of the preceding claims, wherein the ethylene-acrylic acid copolymer has a melt index (190°C/ 2.16 kg, ASTM D 1238) of 5 to 15.

7.  A method for preparing an ethylene-acrylic acid copolymer of any one of the preceding claims, comprising copolymerizing monomers including an ethylene monomer and an acrylic acid monomer in a reactor at a reaction temperature of 150 to 350°C under a reaction pressure of 1,000 to 5,000 bar.

8.  The method of claim 7, wherein the reaction temperature is 180 to 300°C, preferably 200 to 280°C more preferably 220 to 260°C, or wherein the reaction pressure is 1,500 to 4,000 bar, preferably 1,800 to 3,000 bar, more preferably 2,000 to 2,300 bar, or both.

9.  The method of claim 7 or 8, wherein the reactor has a stirrer installed inside for mixing a reactant and a product, and a stirrer shaft has a baffle to divide the inside of the reactor into an upper portion and a lower portion of the reactor.

10. The method of claim 9, wherein the ethylene monomer and the acrylic acid comonomer are supplied separately into the upper portion and the lower portion of the reactor, respectively.

11. The method of claim 10, wherein the reaction temperature in the upper portion of the reactor is adjusted to a temperature that is at least 10°C lower than the reaction temperature in the lower portion of the reactor.

12. The method of any one of claims 7 to 10, wherein the method includes supplying an initiator mixed solution to the reactor, the initiator mixed solution including a radical initiator and a diluting solvent.

**13.** The method of claim 12, wherein the initiator mixed solution is supplied to the reactor at such rate that the content of initiator based on total monomer is 0.05 to 1 wt% based on the combined weight of the monomers, preferably 0.1 to 0.5 wt%, more preferably 0.15 to 0.3 wt%.

**14.** A laminated sheet wherein the ethylene-acrylic acid copolymer of any one of claims 1 to 6 is comprised in an adhesive layer between a metal sheet and a polymer sheet.

**15.** A pack for fluid goods, preferably fluid consumer goods like milk or detergent, which comprises a laminated sheet of claim 14.

FIG. 1

Europäisches
Patentamt

European
Patent Office

Office européen
des brevets

# EUROPEAN SEARCH REPORT

**Application Number**

EP 25 18 6596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 063 408 A1 (SK INNOVATION CO LTD [KR]; SK GEO CENTRIC CO LTD [KR]) 28 September 2022 (2022-09-28) | 1-8, 12-15 | INV. C08F210/02 |
| Y | * paragraphs [0003], [0034], [0043], [0061]; claims 1, 4, 6; examples 1-3; table 1 * | 9-11 | ADD. C09J133/06 |
| X | US 3 520 861 A (THOMSON JOHN E ET AL) 21 July 1970 (1970-07-21) * column 6, lines 14-15 * * column 1, lines 38-51 * * claims 2, 3; example Run 19; table I * | 1,2,5,7, 8,14,15 | |
| Y | CN 110 891 986 A (LG CHEMICAL LTD) 17 March 2020 (2020-03-17) * claim 1 * | 9-11 | |

**TECHNICAL FIELDS SEARCHED (IPC)**

C08F
C09J

The present search report has been drawn up for all claims

| Place of search | Date of completion of the search | Examiner |
|---|---|---|
| Munich | 26 November 2025 | Bernhardt, Max |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

     .................................................................................

& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 18 6596

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2025

| Patent document cited in search report | | Publication date | Patent family member(s) | | Publication date |
|---|---|---|---|---|---|
| EP 4063408 | A1 | 28-09-2022 | CN | 115124643 A | 30-09-2022 |
| | | | DK | 4063408 T3 | 04-12-2023 |
| | | | EP | 4063408 A1 | 28-09-2022 |
| | | | ES | 2971893 T3 | 10-06-2024 |
| | | | HU | E065149 T2 | 28-05-2024 |
| | | | JP | 2022151840 A | 07-10-2022 |
| | | | KR | 20220132867 A | 04-10-2022 |
| | | | PT | 4063408 T | 18-01-2024 |
| | | | US | 2022306778 A1 | 29-09-2022 |
| US 3520861 | A | 21-07-1970 | NONE | | |
| CN 110891986 | A | 17-03-2020 | CN | 110891986 A | 17-03-2020 |
| | | | EP | 3677604 A2 | 08-07-2020 |
| | | | KR | 20190050706 A | 13-05-2019 |
| | | | US | 2021079136 A1 | 18-03-2021 |
| | | | WO | 2019088664 A2 | 09-05-2019 |

EPO FORM P0459

For more details about this annex : see Official Journal of the European Patent Office, No. 12/82